# EUROPEAN PATENT SPECIFICATION

(11) **EP 0 707 984 B1**
(45) Date of publication and mention of the grant of the patent: **15.03.2000**
(21) Application number: 95307442.4
(22) Date of filing: 19.10.1995
(51) Int. Cl.: B60C 9/08, B29D 30/30

(54) **Pneumatic radial tyre and method of making the same**
Gürtelreifen und Verfahren zur Herstellung
Pneumatique radial et procédé de fabrication

(30) Priority: 21.10.1994 JP 28283694
(43) Date of publication of application: 24.04.1996
(73) Proprietor: SUMITOMO RUBBER INDUSTRIES LIMITED, Kobe-shi, Hyogo-ken (JP)
(72) Inventor: Iseki, Tsutomu, 1-5 Aza-doujyoumen, Nishi-shirakawa-gun, Fukushima-ken (JP)
(74) Representative: Stewart, Charles Geoffrey

(56) References cited:
- EP-A- 0 120 623
- US-A- 4 466 473
- PATENT ABSTRACTS OF JAPAN vol. 010, no. 270 (M-517), 13 September 1986 & JP-A-61 094745 (TOYO TIRE & RUBBER CO LTD), 13 May 1986,
- PATENT ABSTRACTS OF JAPAN vol. 010, no. 257 (M-513), 3 September 1986 & JP-A-61 083025 (TOYO TIRE & RUBBER CO LTD), 26 April 1986,

## Description

The present invention relates to a pneumatic radial tyre and a method of making the same, in which occurrence of the dent resulting from an overlap-jointing of a carcass ply is decreased and tyre quality such as uniformity, appearance, durability and the like can be improved.

It is well known that radial tyres are excellent in high speed running performance because a rigid belt is disposed outside the carcass crown portion and so the tread rigidity is increased. Further, the belt decreases load on the carcass, which makes it possible to reduce the number of carcass plies.

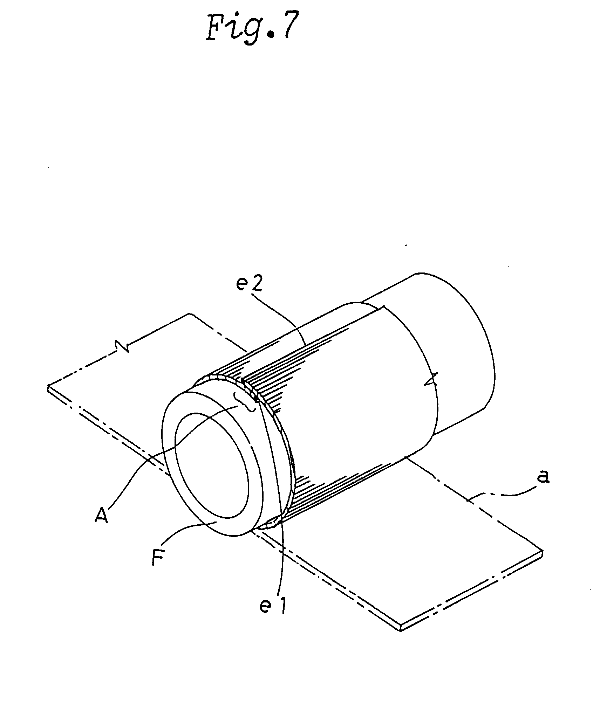

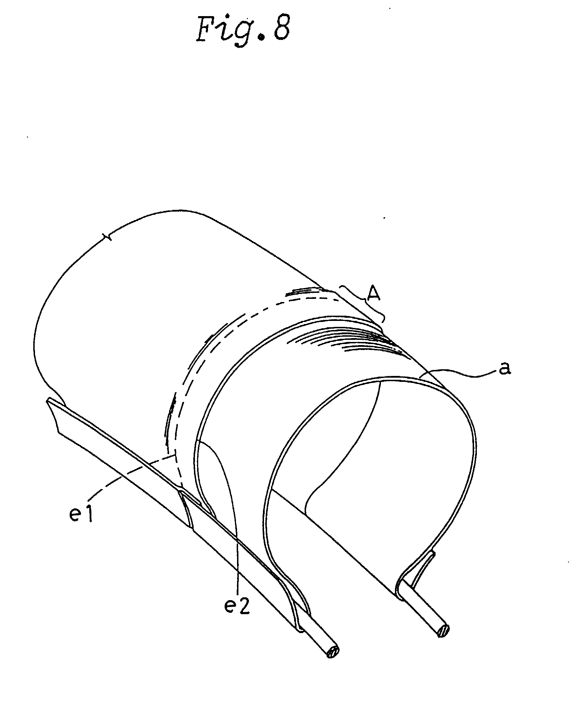

When making a conventional radial tyre, as shown in Fig.7, a carcass ply strip (A) is wound into a cylindrical shape on a former F, and the terminal edge E2 of the winding is overlapped with the starting edge E1 thereof to connect and join the ends. In the finished tyre, as shown in Fig.8, this overlap-joint (A) extends in the radial direction along the carcass cords. As a result, when the tyre is inflated, a so called "joint-dent", a phenomenon where the outer surface of the sidewall portion is dented along the overlap-joint (A), is caused. In particular, if the joint-dent exceeds 0.4 mm, the tyre appearance, durability, uniformity and the like are greatly deteriorated. Further, the dent is greater when the number of carcass plies is small, especially when the carcass consists of a single ply, thereby tyre weight reduction is hindered.

If the width of the overlap-joint (A) is decreased to reduce the joint-dent, the carcass ply opens at the overlap-joint (A) during shaping the carcass, and prevention of this opening necessitates an overlapping of at least two to four carcass cords.

US 4 466 473, which corresponds to the preamble of claim 1 and claim 2, describes preventing sidewall indentation due to ply overlap by forming a number of short cuts over the extent of one of the ply edges. The disclosure requires at least one such cut in each bead region to disconnect the cords in the sidewall from the cords wrapped around the bead in the turn-up portion.

It is therefore, an object of the present invention to provide a pneumatic radial tyre in which the joint-dent is reduced in a more efficient way.

Another object of the present invention is to provide a method of making such a pneumatic radial tyre.

According to one aspect of the present invention, a pneumatic radial tyre comprises at least one carcass ply of cords extending between bead portions through a tread portion and sidewall portions and turned up around bead cores, the carcass ply being wound around the axis of the tyre over one turn so that the terminal edge of the winding of the carcass ply overlaps with the starting edge thereof to define an overlap-joint, the overlap-joint being cut in one of the starting edge or terminal edge along the circumferential direction of the tyre by which carcass cords existing therein are cut, wherein said overlap-joint is provided on the tyre equator with only one cut.

According to another aspect of the present invention, a method of making a pneumatic radial tyre comprises the steps of winding a carcass strip on a former around the axis of the former over one turn to form a carcass ply, overlapping the terminal edge with the starting edge of the winding of the carcass strip to form an overlap-joint, and cutting one of the starting edge or terminal edge in the overlap-joint in a circumferential direction of the tyre whereby carcass cords existing therein are cut, thereby forming only one cut on the tyre equator.

In the above-mentioned conventional overlap-joint (A), the number of carcass cords which extend continuously from bead to bead increases in comparison with the remaining part where there is no overlap, and as a result, the tension in each cord becomes relatively small and the cord elongation becomes relatively decreased. Accordingly, a dent is formed along the overlap-joint part.

However, in the overlap-joint of the present invention, some cords in the joint are cut and lose their function as a tension member. Therefore, the cord tension can be evened around the tyre, and the joint-dent can be effectively prevented.

Further, it becomes possible to provide a sufficient overlapping width without causing a dent, and accordingly, the above-mentioned opening of the overlap-joint during shaping of the carcass can be prevented. As a result, the tyre manufacturing efficiency and working efficiency can be improved.

Embodiments of the present invention will now be explained in conjunction with the attached drawings in which:
Fig.1 is a schematic perspective view showing a pneumatic radial tyre according to the present invention;
Fig.2 is a schematic perspective view showing the carcass thereof;
Fig.3 is a schematic cross sectional view for explaining the steps of winding the carcass strip and forming the overlap-joint;
Fig.4 is a schematic perspective view for explaining the step of forming the cut;
Fig.5, which is not covered by the claims, is a diagram for explaining an example of cuts;
Fig.6 is a diagram showing the effect of the present invention;
Fig.7 is a schematic perspective view showing the conventional carcass strip wound on a former; and
Fig.8 is a schematic perspective view showing the conventional carcass in the finished tyre.

In the drawings, a pneumatic radial tyre 1 according to the present invention is a tubeless radial tyre.

The tyre 1 comprises a tread portion 2, a sidewall portion 3 extending radially inwardly from each edge of the tread portion, a bead portion 4 disposed at the radially inner end of each sidewall portion 3, a bead core 5 disposed in each bead portion 4, a carcass 6 extending between the bead portions 4, an inner liner 7 disposed on the inside of the carcass 6 and facing the tyre cavity H, and a stiff belt layer 9 disposed outside the carcass 6 under the tread portion 2.

The inner liner 7 is an air-tight rubber layer made of for example butyl rubber which also protects the inner surface of the carcass 6.

The belt layer 9 in this embodiment comprises a radially inner belt ply 9A and a radially outer belt ply 9B, each ply being made of cords laid at for example an angle of not more than 30 degrees with respect to the tyre equator C, so that the cords in the belt ply 9A are laid crosswise to the cords in the belt ply 9B, to reinforce substantially the whole width of the tread portion 2 and increase the tyre rigidity.

For the belt cords, various cords such as organic fibre cords, e.g. nylon, rayon, polyester and aromatic polyamide, inorganic fibre cords, e.g. steel cords or the like can be used.

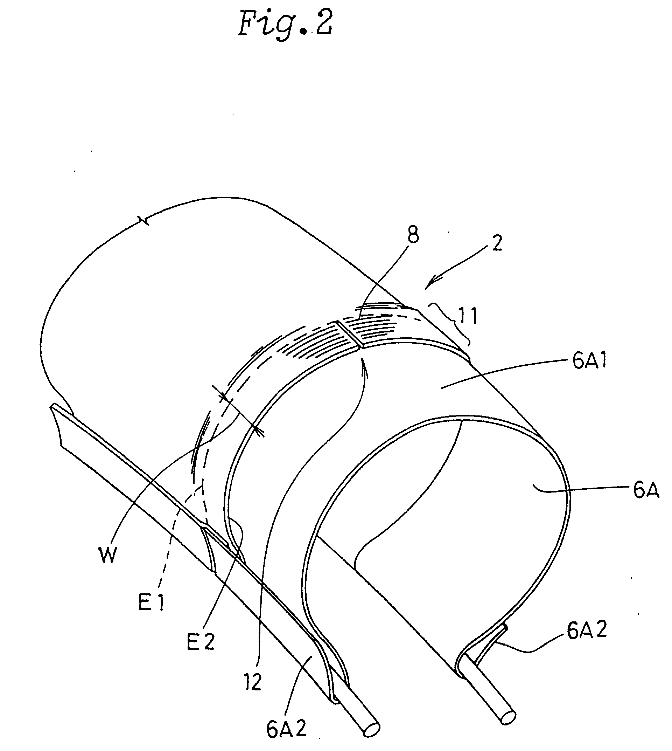

The carcass 6 consists of at least one radial ply 6A, and in this embodiment, as shown in Fig.2, it consists of a single carcass ply 6A. The carcass ply 6A is made of carcass cords 8 arranged at an angle of substantially 90 degrees, about 80 to 90 degrees, with respect to the tyre equator C. The carcass ply 6A extends between the bead portions 4 under the tread portion 2 and through the sidewall portions 3 and is turned up around the bead cores 5 from the axially inside to the outside of the tyre to form a pair of turned up portions 6A2 and a toroidal main portion 6A1 therebetween.

For the carcass cords 8, various cords such as organic fibre cords, e.g. nylon, rayon, polyester and aromatic polyamide, inorganic fibre cords, e.g. steel or the like can be used.

Between the main portion 6A1 and turned up portions 6A2, each bead portion 4 is provided with a bead apex rubber 10 extending radially outwardly taperingly from the radially outer surface of the bead core 5 so as to reinforce the bead portion and sidewall lower portion and to increase the tyre rigidity.

The carcass ply 6A is wound circumferentially of the tyre over one turn so that the terminal or finishing edge E2 of the winding or windings overlaps with the starting edge E1, defining an overlapping joint 11. According to the present invention, carcass cords 8 in the carcass main portion 6A1 in the overlap-joint 11 are cut so that only one cut 12 is provided in either one of the starting edge E1 and the terminal edge E2.

In Fig.2, the radially outward terminal edge E2 is provided on the tyre equator C with only one cut 12 extending in the circumferential direction of the tyre.

Accordingly, the overlap-joint 11 is decreased in its resistance to tension forces and is allowed to elongate or expand under the influence of applied tyre inner pressure. As a result of the allowed expansion, the joint-dent is reduced.

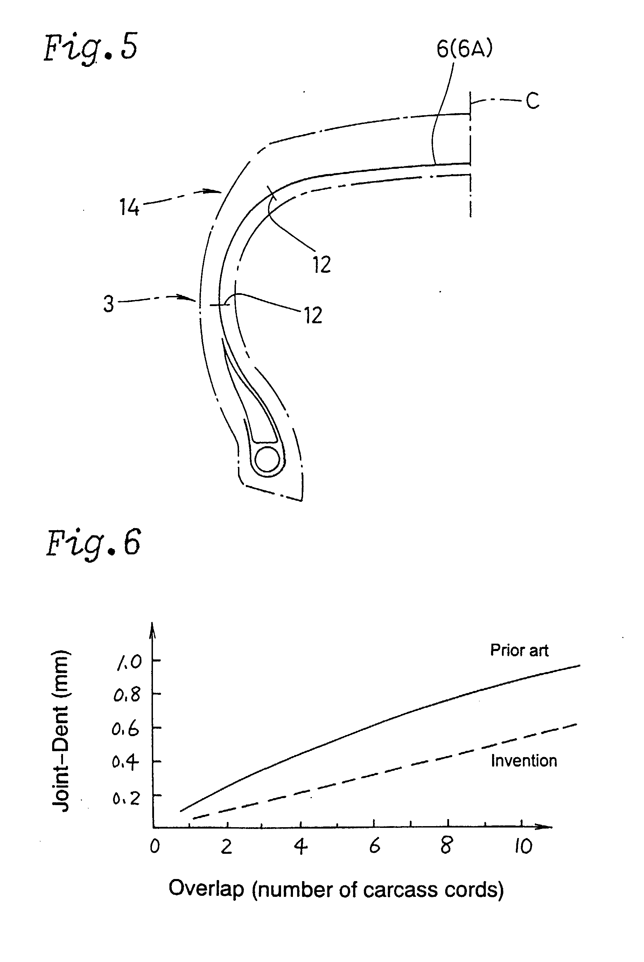

In Fig.5, which does not show an embodiment of the invention, five cuts 12 are provided, one cut in the tread centre, two cuts in the shoulder portions 14 and two cuts in the sidewall portions 3. The cuts are arranged symmetrically about the tyre equatorial plane C.

The width W of the overlap-joint 11 is preferably set to correspond to 3 to 8 carcass cords, that is, 3 to 8 times the cord diameter + the cord space. If the width W is less than 3 cords, the overlap-joint 11 is liable to open at the time of shaping the carcass. If more than 8 cords, it is difficult to keep the dent under 0.4 mm.

When the carcass 6 consists of a plurality of plies 6A and as a result a plurality of overlapping parts 11 are formed in different circumferential positions, each of the overlapping parts 11 must be provided with only one cut 12 as explained above. However, the effect of controlling the occurrence of joint-dent is most noticeable and remarkable when the carcass 6 consists of a single ply 6A.

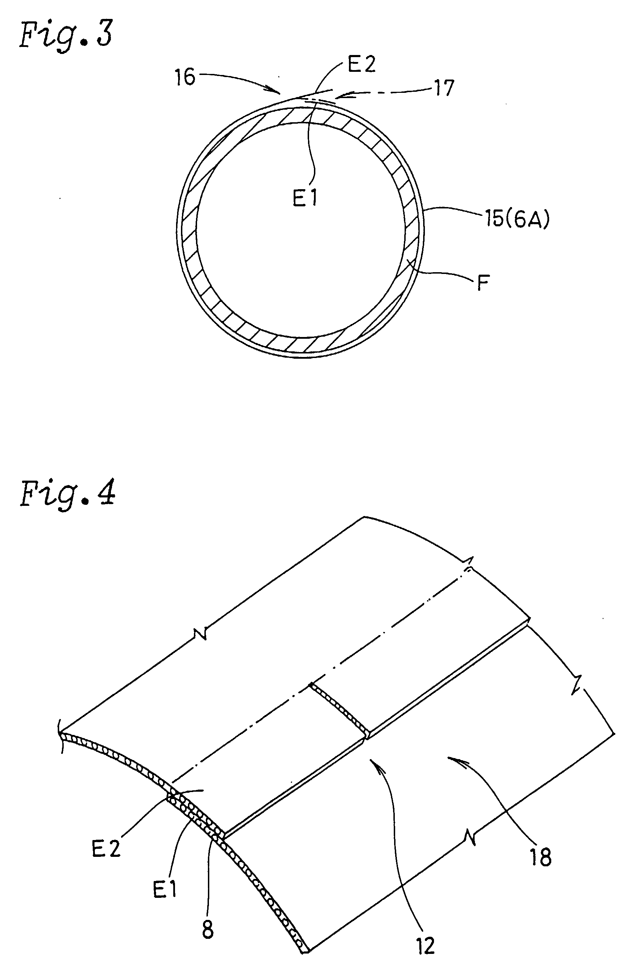

According to the present invention, a method of making the tyre 1 comprises the steps of winding a carcass strip 15 on a former F around the axis thereof over one turn to form the carcass ply 6A as shown in Fig.3, overlapping the terminal edge E2 with the starting edge E1 of the winding of the carcass strip 15 to form an overlap-joint 11 as shown in Fig.4, and cutting one of the starting edge E1 and the terminal edge E2 of the overlap-joint 11 along the tyre circumferential direction at at least one position to form only one cut 12 by which carcass cords 8 existing therein are cut as shown in Fig.4.

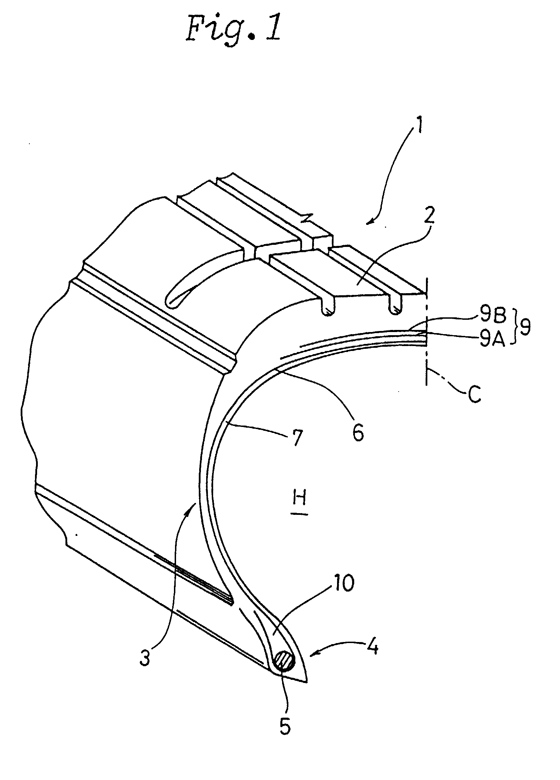

Example tyres having the structure shown in Fig.1 and a prior art tyre having the carcass structure shown in Fig.8 were made and measured for the joint-dent. The results are shown in Fig.6.

As shown in Fig.6, it was confirmed that the dent of the Example tyres was decreased to about one half of that of the prior art tyre, and tyre uniformity, appearance, durability and the like were improved. Further, it was confirmed that the number of carcass cords existing in the overlapping joint could be increased up to eight while maintaining the joint-dent of less than 0.4 mm, and the tyre manufacturing efficiency and working efficiency could be improved.

## Claims

1. A pneumatic radial tyre (1) comprising a carcass (6) comprising at least one ply (6A) of cords (8) extending between bead portions (4) under a tread portion (2) and sidewall portions (3) and turned up around bead cores (5), said carcass ply (6A) being wound around the axis of the tyre over one turn so that the terminal edge (E2) of the winding of the carcass ply overlaps with the starting edge (E1) thereof to define an overlap-joint (11), said overlap-joint (11) being cut in one of the starting edge (E1) or terminal edge (E2) along the circumferential direction of the tyre by which carcass cords (8) existing therein are cut, characterised in that said overlap-joint (11) is provided on the tyre equator (C) with only one cut (12).

2. A method of making a pneumatic radial tyre comprising the steps of, winding a carcass strip around the axis of a former (F) over one turn to form a carcass ply (6A), overlapping the terminal edge (E2) with the starting edge (E1) of the winding of said carcass strip (6A) to form an overlap joint (11), cutting one of said starting edge (E1) or terminal edge (E2) in said overlap joint (11) in a circumferential direction of the tyre whereby carcass cords (8) existing therein are cut, characterised by forming only one cut (12) on the tyre equator (C).

3. A method of making a pneumatic radial tyre according to claim 2, characterised in that the step of cutting the starting edge (E1) is prior to the step of winding the carcass strip.

4. A method of making a pneumatic radial tyre according to claim 2, characterised in that the step of cutting the terminal edge (E2) is prior to the end of the step of winding the carcass strip.

## Patentansprüche

1. Radialluftreifen (1), umfassend eine Karkasse (6) mit mindestens einer Lage (6A) aus Corden (8), die sich zwischen Wulstabschnitten (4) unter einem Laufflächenabschnitt (2) und Seitenwandabschnitten (3) erstreckt und um Wulstkerne (5) herum umgeschlagen ist, wobei die Karkaßlage (6A) um die Achse des Reifens über eine Windung derart herumgewickelt ist, daß die Endkante (E2) der Wicklung der Karkaßlage deren Ausgangskante (E1) überlappt, so daß eine Überlappverbindung (11) festgelegt ist, wobei die Überlappverbindung (11) in entweder der Ausgangskante (E1) oder der Endkante (E2) entlang der Umfangsrichtung des Reifens eingeschnitten ist, wodurch darin vorhandene Karkaßcorde (8) durchgeschnitten sind, dadurch gekennzeichnet, daß die Überlappverbindung (11) auf dem Reifenäquator (C) mit nur einem Einschnitt (12) versehen ist.

2. Verfahren zum Herstellen eines Radialluftreifens mit den Schritten, daß ein Karkaßstreifen um die Achse einer Formungstrommel (F) über eine Windung gewickelt wird, so daß eine Karkaßlage (6A) gebildet wird, wobei die Endkante (E2) die Ausgangskante (E1) der Wicklung des Karkaßstreifens (6A) überlappt, so daß eine Überlappverbindung (11) gebildet wird, entweder die Ausgangskante (E1) oder die Endkante (E2) in der Überlappverbindung (11) in einer Umfangsrichtung des Reifens eingeschnitten wird, wodurch darin vorhandene Karkaßcorde (8) durchgeschnitten werden, dadurch gekennzeichnet, daß nur ein Einschnitt (12) auf dem Reifenäquator (C) gebildet wird.

3. Verfahren zum Herstellen eines Radialluftreifens nach Anspruch 2, dadurch gekennzeichnet, daß der Schritt des Einschneidens der Ausgangskante (E1) vor dem Schritt des Wickelns des Karkaßstreifens erfolgt.

4. Verfahren zum Herstellen eines Radialluftreifens nach Anspruch 2, dadurch gekennzeichnet, daß der Schritt des Einschneidens der Endkante (E2) vor dem Ende des Schrittes des Wickelns des Karkaßstreifens erfolgt.

## Revendications

1. Pneumatique (1) à carcasse radiale comprenant une carcasse (6) qui comporte au moins une nappe (6A) de câbles (8) qui s'étend entre des parties de talon (4) sous une partie de bande de roulement (2) et des parties de flanc (3) et est repliée autour de tringles (5), la nappe de carcasse (6A) étant enroulée autour de l'axe du pneumatique sur un tour afin que le bord terminal (E2) de l'enroulement de la nappe de carcasse recoupe le bord initial (E1) de cet enroulement pour la délimitation d'un joint à recouvrement (11), le joint à recouvrement (11) étant découpé à l'un des bords initial (E1) et terminal (E2) dans la direction circonférentielle du pneumatique si bien que les câbles (8) de carcasse existant dans cette partie sont coupés, caractérisé en ce que le joint à recouvrement (11) est disposé sur l'équateur du pneumatique (C) avec une seule découpe (12).

2. Procédé de confection d'un pneumatique à carcasse radiale comprenant les étapes suivantes : l'enroulement d'une bande de carcasse autour de l'axe d'un organe formateur (F) sur un tour pour la formation d'une nappe de carcasse (6A), le recouvrement du bord terminal (E2) et du bord initial (E1) de l'enroulement de la bande de carcasse (6A) pour la formation d'un joint à recouvrement (11), la découpe de l'un des bords initial (E1) et terminal (E2) dans le joint à recouvrement (11), en direction circonférentielle du pneumatique, si bien que des câbles de carcasse (8) existant dans cette partie sont coupés, caractérisé par la formation d'une seule découpe (12) sur l'équateur du pneumatique (C).

3. Procédé de confection d'un pneumatique à carcasse radiale selon la revendication 2, caractérisé en ce que l'étape de coupe du bord initial (E1) est réalisée avant l'étape d'enroulement de la bande de carcasse.

4. Procédé de confection d'un pneumatique à carcasse radiale selon la revendication 2, caractérisé en ce que l'étape de coupe du bord terminal (E2) précède la fin de l'étape d'enroulement de la bande de carcasse.
